# EUROPEAN PATENT APPLICATION

(11) **EP 4 654 073 A1**
(43) Date of publication of application: **26.11.2025**
(21) Application number: 24744262.7
(22) Date of filing: 16.01.2024
(51) Int. Cl.: G06F 40/174

(54) **DATA FILLING METHOD AND APPARATUS FOR TABLES, ELECTRONIC DEVICE, AND STORAGE MEDIUM**

(30) Priority: 16.01.2023 CN 202310084583
(71) Applicant: Zhuhai Kingsoft Office Software Co., Ltd, Zhuhai, Guangdong 519080 (CN); Beijing Kingsoft Office Software, Inc., Beijing 100085 (CN); Wuhan Kingsoft Office Software Co., Ltd., Wuhan, Hubei 430070 (CN)
(72) Inventor: CHEN, Bo, Zhuhai, Guangdong 519080 (CN); CHEN, Jiafeng, Zhuhai, Guangdong 519080 (CN)
(74) Representative: Botti & Ferrari S.p.A.
(86) International application number: PCT/CN2024/072607
(87) International publication number: WO 2024/153087

(57) **Abstract**

Disclosed are a method and an apparatus for filling data in a table, an electronic device and a storage medium. The method for filling data in a table includes: determining a target copy range in a first table in response to a copy operation on the first table; determining a paste cell corresponding to each copy cell in the target copy range in a second table, in which the copy cell and the corresponding paste cell have at least one associated target parameter; and filling cell data in the copy cell into the corresponding paste cell.

## Description

### Cross-Reference To Related Applications

The present disclosure claims all benefits of Chinese patent application No. 202310084583.X entitled "METHOD AND APPARATUS FOR FILLING DATA IN TABLE, ELECTRONIC DEVICE AND STORAGE MEDIUM" filed before China National Intellectual Property Administration (CNIPA) on January 16, 2023, which is incorporated herein by reference in its entirety.

### Field

The present disclosure generally relates to the field of computers, more particularly to a method and an apparatus for filling data in a table, an electronic device and a storage medium.

### Background

In daily office works, various kinds of data are not always in one table but are distributed in different tables. When data needs to be transferred between two tables, the data can only be manually searched, and copied and pasted repeatedly between the two tables.

For example, although names of participants have been registered in a competition entry form, some pieces of personal information need to be copied from a roster containing complete personal information (mobile number, gender, age, etc.) and pasted into the competition entry form. In this case, a participant's name can only be manually selected from the competition entry form, information corresponding to the participant's name is searched in the roster and then copied and pasted into the competition entry form. Information corresponding to a next participant's name is searched in the roster and the above steps are repeated.

Therefore, the above method not only results in low efficiency of data transfer, but is also prone to data errors due to manual mis-operation.

### Summary

In a first aspect, the present disclosure provides a method for filling data in a table, including:
determining a target copy range in a first table in response to a copy operation on the first table;
determining a paste cell corresponding to each copy cell in the target copy range in a second table, in which the copy cell and the corresponding paste cell have at least one associated target parameter; and
filling cell data in the copy cell into the corresponding paste cell.

In some embodiments, determining a paste cell corresponding to each copy cell in the target copy range in a second table includes:
determining a paste cell corresponding to each copy cell in the target copy range in a second table based on text recognition.

In some embodiments, determining a target copy range in a first table includes:
determining a range formed by columns where a first cell range is located as the target copy range, the first cell range being a cell range corresponding to the copy operation.

In some embodiments, determining a paste cell corresponding to each copy cell in the target copy range in a second table includes:
determining a target paste range in a second table, the target paste range including at least one column in the second table;
determining a condition column in the second table and determining a search range in the first table; and
determining in the target paste range, based on the condition column and the search range, a paste cell corresponding to each copy cell in the target copy range.

In some embodiments, determining in the target paste range, based on the condition column and the search range, a paste cell corresponding to each copy cell in the target copy range includes:
determining each row included in the target paste range as a to-be-processed row, and performing following processing on the to-be-processed row:
determining cell data located in the to-be-processed row in the condition column as condition data;
determining the condition data in the search range, determining a row where the condition data is located as a target row;
determining a range formed by a copy cell located in the target row in the target copy range as a sub-target copy range corresponding to the to-be-processed row; and
performing following processing on each copy cell in the sub-target copy range:
   determining a target paste cell that meets set conditions from the to-be-processed row, in which the set conditions refer to that the paste cell and the copy cell have the same relative position configured to characterize a position of the paste cell in the to-be-processed row, or a position of the copy cell in the sub-target copy range; and
   determining the target paste cell as the paste cell corresponding to the copy cell.

In some embodiments, determining a target paste range in a second table includes:
in a case where numbers of rows and columns of a second cell range and the first cell range are the same, determining a range formed by a column where the second cell range is located as a target paste range, the second cell range being a range corresponding to a paste operation on the second table.

In some embodiments, determining a target paste range in a second table includes:
performing following processing on each column where the first cell range is located:
determining a column header of the column; and
in a case where it is determined that there is a target column header matching the column header among header rows of the second table, determining the range formed by a column corresponding to the target column header as a target paste range.

In some embodiments, determining a condition column in the second table and determining a search range in the first table includes:
in a case where both the first cell range and the second cell range are located in only one row, determining a first cell data set corresponding to a row where the first cell range is located and a second cell data set corresponding to a row where the second cell range is located, the second cell range being a range corresponding to a paste operation on the second table; and
determining a same item in the first cell data set and the second cell data set, determining a column where the same item is located in the second table as a condition column, and determining a column where the same item is located in the first table as a search range.

In some embodiments, determining a condition column in the second table and determining a search range in the first table includes:
in a case where both the first cell range and the second cell range are located in N rows, N being a natural number greater than 1, performing following processing on each row where the first cell range is located, the second cell range being a range corresponding to a paste operation on the second table:
determining a third cell data set corresponding to the row;
determining a corresponding row of the row in the second cell range, and determining a fourth cell data set corresponding to the corresponding row;
determining a same item set in the third cell data set and the fourth cell data set; and
determining a same item in the same item set corresponding to each row where the first cell range is located, determining a column where the same item is in the second table as the condition column, and determining a column where the same item is in the first table as a search range.

In some embodiments, determining a target copy range in a first table includes:
determining a first column header set corresponding to the first table, and a second column header set corresponding to a second table;
determining associated column headers in the first column header set and the second column header set; and
determining a range formed by a cell corresponding to the associated column headers in a row where the first cell range is located as a target copy range, the first cell range being a cell range corresponding to the copy operation.

In some embodiments, determining a paste cell corresponding to each copy cell in the target copy range in a second table includes:
determining a target paste range in a second table, the target paste range including at least two cells in a same row in the second table;
performing the following processing on each copy cell in the target copy range:
   determining a target paste cell that meets set conditions from the target paste range, the set conditions referring to a column header corresponding to the paste cell and the copy cell; and
   determining the target paste cell as a paste cell corresponding to the copy cell.

In some embodiments, determining a target paste range in a second table includes:
determining a range formed by a cell corresponding to the associated column headers in a row where a second cell range is located as a target paste range, the second cell range being a range corresponding to a paste operation on the second table.

In some embodiments, filling cell data in the copy cell into the corresponding paste cell includes:
performing following processing on the paste cell:
constructing a data filling formula based on a copy cell corresponding to the paste cell; and
filling the data filling formula into the paste cell, in which
the data filling formula is configured to indicate that the cell data in the corresponding copy cell is presented in the paste cell.

In a second aspect, the present disclosure provides an apparatus for filling data in a table, including:
a copy range determining module configured to determine a target copy range in a first table in response to a copy operation on the first table;
a paste cell determining module configured to determine a paste cell corresponding to each copy cell in the target copy range in a second table, in which the copy cell and the corresponding paste cell have at least one associated target parameter; and
a data filling module configured to fill cell data in the copy cell into the corresponding paste cell.

In some embodiments, the paste cell determining module is configured to determine a paste cell corresponding to each copy cell in the target copy range in a second table based on text recognition.

In some embodiments, the copy range determining module is configured to determine a range formed by columns where a first cell range is located as the target copy range, the first cell range being a cell range corresponding to the copy operation.

In some embodiments, the paste cell determining module includes:
a paste range determining unit configured to determine a target paste range in a second table, the target paste range including at least one column in the second table;
a condition determining unit configured to determine a condition column in the second table and determine a search range in the first table; and
a cell determining unit configured to determine in the target paste range, based on the condition column and the search range, a paste cell corresponding to each copy cell in the target copy range.

In some embodiments, the cell determining unit includes:
a condition data determining sub-unit configured to determine each row included in the target paste range as a to-be-processed row and perform following processing on the to-be-processed row: determining cell data located in the to-be-processed row in the condition column as condition data;
a target row determining sub-unit configured to determine the condition data in the search range and determine a row where the condition data is located as a target row;
a sub-target copy range determining sub-unit configured to determine a range formed by a copy cell located in the target row in the target copy range as a sub-target copy range corresponding to the to-be-processed row; and
a target paste cell determining sub-unit configured to perform following processing on each copy cell in the sub-target copy range:
   determining a target paste cell that meets set conditions from the to-be-processed row, in which the set conditions refer to that the paste cell and the copy cell have the same relative position configured to characterize a position of the paste cell in the to-be-processed row, or a position of the copy cell in the sub-target copy range; and
   determining the target paste cell as the paste cell corresponding to the copy cell.

In some embodiments, the paste range determining unit is configured to:
in a case where numbers of rows and columns of a second cell range and the first cell range are the same, determining a range formed by a column where the second cell range is located as a target paste range, the second cell range being a range corresponding to a paste operation on the second table.

In some embodiments, the paste range determining unit is configured to perform following processing on each column where the first cell range is located:
determining a column header of the column; and
in a case where it is determined that there is a target column header matching the column header among header rows of the second table, determining the range formed by a column corresponding to the target column header as a target paste range.

In some embodiments, the condition data determining sub-unit is configured to:
in a case where both the first cell range and the second cell range are located in only one row, determine a first cell data set corresponding to a row where the first cell range is located and a second cell data set corresponding to a row where the second cell range is located, the second cell range being a range corresponding to a paste operation on the second table; and
determine a same item in the first cell data set and the second cell data set, determine a column where the same item is located in the second table as a condition column, and determine a column where the same item is located in the first table as a search range.

In some embodiments, the condition data determining sub-unit is configured to:
in a case where both the first cell range and the second cell range are located in N rows, N being a natural number greater than 1, perform following processing on each row where the first cell range is located, the second cell range being a range corresponding to a paste operation on the second table:
determining a third cell data set corresponding to the row;
determining a corresponding row of the row in the second cell range, and determining a fourth cell data set corresponding to the corresponding row;
determining a same item set in the third cell data set and the fourth cell data set; and
determining a same item in the same item set corresponding to each row where the first cell range is located, determining a column where the same item is in the second table as the condition column, and determining a column where the same item is in the first table as a search range.

In some embodiments, the copy range determining module is configured to:
determine a first column header set corresponding to the first table and a second column header set corresponding to a second table;
determine associated column headers in the first column header set and the second column header set; and
determine a range formed by a cell corresponding to the associated column headers in a row where the first cell range is located as a target copy range, the first cell range being a cell range corresponding to the copy operation.

In some embodiments, the paste cell determining module includes:
a paste range determining unit configured to determine a target paste range in a second table, the target paste range including at least two cells in a same row in the second table;
a paste cell determining unit configured to perform following processing on each copy cell in the target copy range:
   determining a target paste cell that meets set conditions from the target paste range, the set conditions referring to a column header corresponding to the paste cell and the copy cell; and
   determining the target paste cell as a paste cell corresponding to the copy cell.

In some embodiments, the paste range determining unit is configured to determine a range formed by a cell corresponding to the associated column headers in a row where a second cell range is located as a target paste range, the second cell range being a range corresponding to a paste operation on the second table.

In some embodiments, the data filling module is configured to perform following processing on the paste cell:
constructing a data filling formula based on the copy cell corresponding to the paste cell; and
filling the data filling formula into the paste cell, in which
the data filling formula is configured to indicate that the cell data in the corresponding copy cell is presented in the paste cell.

In a third aspect, the present disclosure provides an electronic device including a processor and a memory, in which the processor is configured to execute a program for filling data in a table stored in the memory to implement the method for filling data in a table of the present disclosure.

In a fourth aspect, the present disclosure provides a storage medium in which one or more programs are stored. The one or more programs are executed by one or more processors to implement the method for filling data in a table of the present disclosure.

In some embodiments, the target copy range in the first table is determined in response to a copy operation on a first table, the paste cell corresponding to each copy cell in the target copy range is determined in the second table, cell data in each copy cell is filled into the corresponding paste cell respectively, multiple groups of corresponding copy cells and paste cells are determined in a source table where the source data to be copied is located and a table to be filled, and multiple data are copied and pasted between the source table and the table to be filled, thereby improving the efficiency of data transfer between the two tables, solving a technical problem in the related art that efficiency of data transfer is low since copying and pasting multiple data between two tables completely relies on manually repeated copy and paste operations and effectively reducing possible mis-operations caused by repeated manual operations.

### Brief Description of the Drawings

FIG. 1 is an example flowchart of a method for filling data in a table according to an embodiment of the present disclosure;
FIG. 2 is a diagram of an application scenario according to an embodiment of the present disclosure;
FIG. 3 is a diagram of another application scenario according to an embodiment of the present disclosure;
FIG. 4 is a diagram of yet another application scenario according to an embodiment of the present disclosure;
FIG. 5 is an example flowchart of another method for filling data in a table according to an embodiment of the present disclosure;
FIG. 6 is an example flowchart of yet another method for filling data in a table according to an embodiment of the present disclosure;
FIG. 7 is an example flowchart of yet another method for filling data in a table according to an embodiment of the present disclosure;
FIG. 8 is an example flowchart of still another method for filling data in a table according to an embodiment of the present disclosure;
FIG. 9 is an example block diagram of an apparatus for filling data in a table according to an embodiment of the present disclosure; and
FIG. 10 is a structure diagram of an electronic device according to an embodiment of the present disclosure.

### Detailed Description

In order to make objects, technical solutions, and advantages of embodiments of the disclosure clearer, the technical solutions in the embodiments of the disclosure will be clearly and fully described below in combination with the accompanying drawings in the embodiments of the disclosure. Obviously, the embodiments to be described are part of embodiments but not all embodiments of the disclosure. Based on the embodiments in the disclosure, all other embodiments obtained by those of ordinary skill in the art without inventive work shall fall within the scope of the disclosure.

The method for filling data in a table provided by the present disclosure will be further explained below with specific embodiments in combination of the drawings, and the embodiments do not limit the embodiments of the present disclosure.

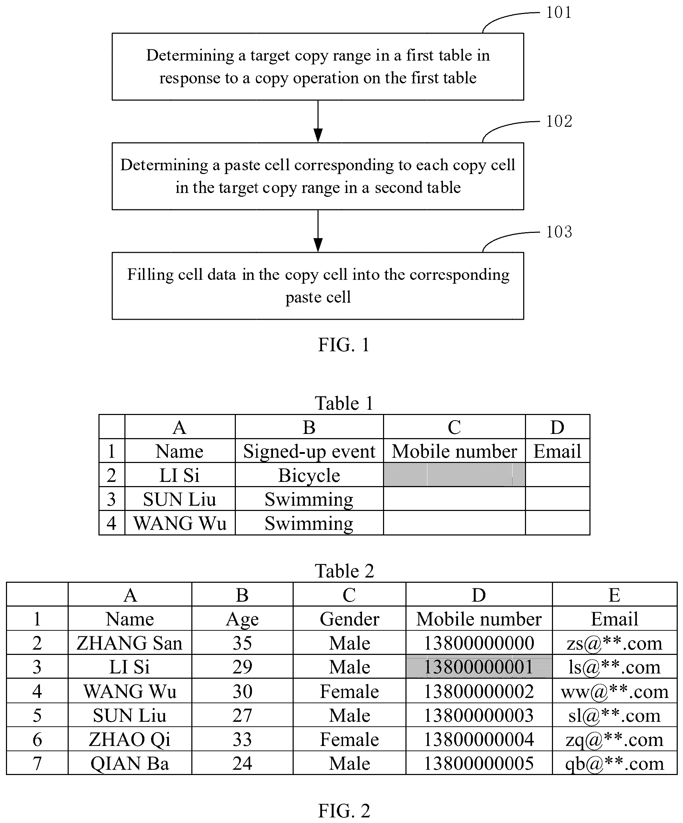

Referring to FIG. 1, FIG. 1 is an example flowchart of a method for filling data in a table according to an embodiment of the present disclosure. As shown in FIG. 1, the method includes the following steps:
step 101: determining a target copy range in a first table in response to a copy operation on the first table;
step 102: determining a paste cell corresponding to each copy cell in the target copy range in a second table; and
step 103: filling cell data in the copy cell into the corresponding paste cell.

The first table mentioned above refers to a table where source data is in, which may be a worksheet or a range in a worksheet, and is not specifically limited here.

The copy operation on the first table may be a copy operation on one or more selected cells in the first table. In a case where there are multiple selected cells, the multiple selected cells may be cells in the same row (including that the entire row is selected), or cells in the same column (including that the entire column is selected), or cells in multiple rows and columns, which are not specifically limited here.

In some embodiments, a user may select one or more cells in the first table by manipulating a mouse. In some embodiments, a user may first select a cell by manipulating a mouse, then hold down a left button of the mouse and drag the mouse, and the cells which a cursor passes become the selected cell until the user releases the left button of the mouse.

In some embodiments, a user may select one or more cells in the first table by specifying a cell reference (including a row number and a column letter, referred to as a cell reference). In some embodiments, assuming that the cell reference specified by the user is A5, a cell in row 5 of column A is determined as the selected cell. In some embodiments, assuming that the cell reference specified by the user is A5:B6, four cells in row 5 of column A, row 6 of column A, row 5 of column B, and row 6 of column B are determined as the selected cells.

The target copy range mentioned above is composed of multiple cells in the first table. It can be seen therefrom that the technical solution provided by the embodiment of the present disclosure can be applied to copy and paste batch cell data.

In some embodiments, the target copy range is determined in the first table when a copy operation on the first table is detected. Generally, the target copy range may include other cells in addition to the selected cells mentioned above, that is, the cell range corresponding to the copy operation (hereinafter referred to as a first cell range for convenience of description).

In some embodiments, the target copy range includes a range formed by columns where the first cell range is located. That is to say, determining the target copy range in the first table may include: determining a range formed by columns where the first cell range is located as the target copy range.

For ease of understanding, a specific example of the embodiment is given in conjunction with a second table to be filled in the following explanation of step 102, which is not described in detail here.

In some embodiments, the target copy range includes the first cell range and a range formed by cells in a row where the first cell range is located that meet certain conditions.

For ease of understanding, a specific example of the embodiment is given in conjunction with a second table to be filled in the following explanation of step 102, which is not described in detail here.

It can be seen that the technical solution provided by the embodiment of the present disclosure is different from the related art in which the copy range depends entirely on the user's selection operation, which can automatically expand the copy range, automatically fill the table and save user operations.

In addition, in some embodiments, whether to expand the copy range is selected based on user operations. For example, a reminder message for indicating the expansion of the copy range is output through a user interaction interface (such as a pop-up reminder message). If the user triggers an indication operation to allow the expansion of the copy range in response to the reminder message, the copy range is expanded. If the user triggers an indication operation to refuse the expansion of the copy range in response to the reminder message, the copy range is not expanded and only the cell range selected by the user through the copy operation is determined as the copy range. A phenomenon that the user's original intention is violated, that is, the user only wants to copy and paste the selected cell range but redundantly copies and pastes other cell ranges together can be avoided through the above processing.

The second table mentioned above refers to a target table to be filled, which may be a worksheet or a range in a worksheet, and is not specifically limited here. In some embodiments, the first table and the second table may be different worksheets, different ranges in the same worksheet, or ranges in different worksheets, which are not specifically limited here.

In some embodiments, after performing a copy operation on the first table, the user may perform a paste operation on another table, and determine the table corresponding to the paste operation as the second table.

The paste operation mentioned above may be a paste operation on one or more selected cells in the second table. In a case where there are multiple selected cells, the multiple selected cells may be cells in the same row (including that the entire row is selected), or cells in the same column (including that the entire column is selected), or cells in multiple rows and columns, which are not specifically limited here.

The paste cell mentioned above refer to a cell to be filled in the second table, and whether the paste cell is empty is not specifically limited here. That is to say, even if the paste cell originally has cell data, the technical solution provided by the embodiment of the present disclosure may also be applied to replace (or overwrite) the original cell data in the paste cell.

In some embodiments, the paste cell may include a cell corresponding to the paste operation mentioned above, or may not include a cell corresponding to the paste operation mentioned above, which are not specifically limited here. It can be seen that in a case where the paste cell does not include the cell corresponding to the paste operation, the technical solution provided by the embodiment of the present disclosure can be applied to automatically determine the paste cell from the second table without relying on user operations, which can reduce the requirements for user operations and improve user experience.

In addition, in the embodiment of the present disclosure, a range composed of all paste cells is referred to as a target paste range.

In some embodiments, the target paste range may be first determined in the second table, and a paste cell corresponding to each copy cell in the target copy range may then be determined in the target paste range. It can be seen that the paste cell in the target paste range and the copy cell in the target copy range are in one-to-one correspondence.

In any of the above embodiments, the copy cell and the paste cell corresponding to the copy cell have at least one associated target parameter;
the target parameter may represent a specific meaning corresponding to the data filled in the cell, and may be reflected by a row header and/or a column header corresponding to the cell. That is, the target parameter may include a row header and/or a column header. For example, the table data "13800000000" shown in FIG. 2 represents a mobile number of ZHANG San. Since the copy cell and the paste cell corresponding to the copy cell have at least one associated target parameter, the data filled in the copy cell and the paste cell corresponding to the copy cell are associated.

In some embodiments, the above target parameter may be disclosed in the table. For example, the table data shown in FIG. 2 contains specific column headers or row headers.

In some embodiments, the above target parameter may also be not disclosed (or implied) in the table. In this case, an implicit column header of a column may be automatically determined based on data filled in the column, or an implicit row header of a row may be automatically determined based on data filled in the row. In this embodiment, as an optional implementation, an implicit column header of the column where the data is located or an implicit row header of the row where the data is located may be intelligently identified based on parameters such as the data type, data format, data rule, and data semantics. For example, the implicit column header of the column or the implicit row header of the row where the data is located is identified as "Mobile Number" based on the data "13800000000", and the implicit column header of the column or the implicit row header of the row where the data is located is identified as "Date" based on the data "2023-11-12", etc.

In some embodiments, the association mentioned above refers to the same.

In some embodiments, the association mentioned above refers to similar in semantics. For example, although texts of two column headers (or row headers) "Mobile Number" and "Phone Number" are not the same in text, but are similar in semantics, and the two column headers (or row headers) may be regarded as associated.

In some embodiments, in a case where the target copy range includes the range formed by each column where the first cell range is located, the target paste range may include at least one column in the second table. In a case where the target copy range includes the first cell range and a range formed by cells that meet certain conditions in a row where the first cell range is located, the target paste range may include at least two cells in the same row in the second table.

In some embodiments, in a case where the target copy range includes the range formed by each row where the first cell range is located, the target paste range may include at least one row in the second table. In a case where the target copy range includes the first cell range and a range formed by cells that meet certain conditions in a column where the first cell range is located, the target paste range may include at least two cells in the same column in the second table.

Referring to FIG. 2, FIG. 2 is a diagram of an application scenario according to an embodiment of the present disclosure. In the application scenario shown in FIG. 2, Table 1 is the second table, and Table 2 is the first table. It is assumed that the user selects a cell in column D and row 3 in the first table and performs copy operation on the cell, and it is assumed that the user selects a cell in column C and row 2 in the second table and performs paste operation on the cell.

In the application scenario shown above, by applying the technical solution provided by the embodiment of the present disclosure, a range formed by a cell in column D in Table 2 may be determined as the target copy range, and a range formed by a cell in column C in Table 1 may be determined as the target paste range, paste cells corresponding to copy cells in the target copy range are determined in the target paste range, and then cell data in the copy cells is filled into the respective paste cells.

In some embodiments, a cell in column C and row 3 in Table 1 is determined as a paste cell corresponding to a copy cell in column D and row 5 in Table 2, and cell data in the copy cell in column D and row 5 in Table 2 is then filled into the paste cell in column C and row 3 in Table 1.

In some embodiments, a cell in column C and row 4 in Table 1 is determined as a paste cell corresponding to a copy cell in column D and row 4 in Table 2, and cell data in the copy cell in column D and row 4 in Table 2 is then filled into the paste cell in column C and row 4 in Table 1.

By analogy, the user can fill the mobile numbers in Table 2 into Table 1 by performing only one copy operation, and can accurately correspond the mobile number to the user, which greatly saves user operations compared with the related art.

How to determine the target copy range in the first table and determine the target paste range in the second table will be explained below through specific embodiments, which are not described in detail here.

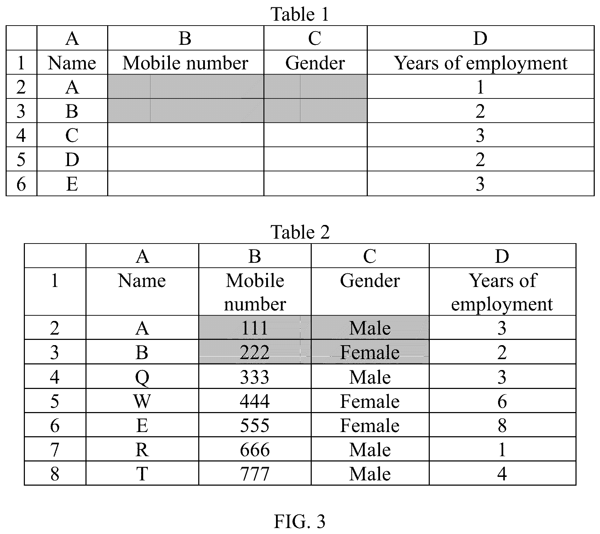

Referring to FIG. 3, FIG. 3 is a diagram of another application scenario according to an embodiment of the present disclosure. In the application scenario shown in FIG. 3, Table 1 is the second table, and Table 2 is the first table. It is assumed that the user selects a cell in column B and row 2, a cell in column C and row 2, a cell in column B and row 3 and a cell in column C and row 3 in the first table and performs copy operation on these cells, and it is assumed that the user selects a cell in column B and row 2, a cell in column C and row 2, a cell in column B and row 3 and a cell in column C and row 3 in the second table and performs paste operation on these cells.

In the application scenario shown above, by applying the technical solution provided by the embodiment of the present disclosure, a range formed by cells in columns B and C in Table 2 may be determined as the target copy range, and a range formed by cells in columns B and C in Table 1 may be determined as the target paste range, a paste cell corresponding to each copy cell in the target copy range is determined in the target paste range, and then cell data in each copy cell is filled into the corresponding paste cell.

In some embodiments, a cell in column B and row 2 in Table 1 is determined as a paste cell corresponding to a copy cell in column B and row 2 in Table 2, and cell data in the copy cell in column B and row 2 in Table 2 is then filled into the paste cell in column B and row 2 in Table 1.

In some embodiments, a cell in column C and row 3 in Table 1 is determined as a paste cell corresponding to a copy cell in column C and row 3 in Table 2, and cell data in the copy cell in column C and row 3 in Table 2 is then filled into the paste cell in column C and row 3 in Table 1.

By analogy, the user may perform only one copy operation to fill both the mobile number and gender in Table 2 into Table 1, and can accurately correspond the mobile number and gender to the user, which greatly saves user operations compared with the related art.

How to determine the target copy range in the first table and determine the target paste range in the second table will be explained below through specific embodiments, and are not described in detail here.

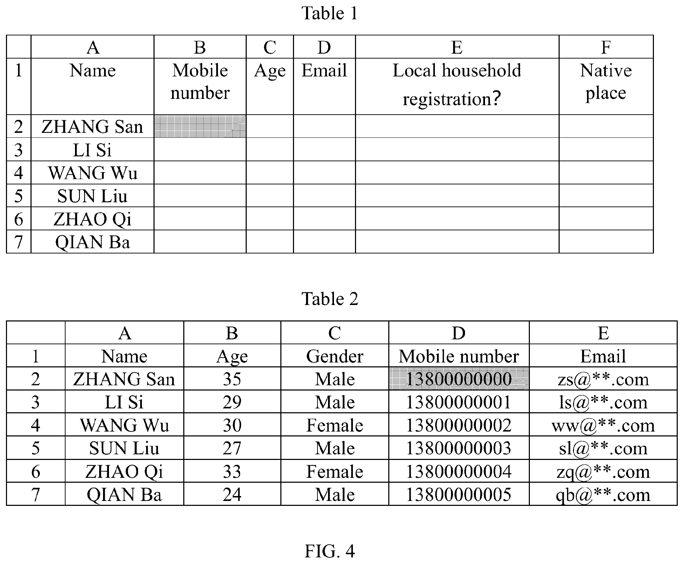

Referring to FIG. 4, FIG. 4 is a diagram of yet another application scenario according to an embodiment of the present disclosure. In the application scenario shown in FIG. 4, Table 1 is the second table, Table 2 is the first table. It is assumed that the user selects a cell in column D and row 2 in the first table and performs copy operation on the cell, and it is assumed that the user selects a cell in column B and row 2 in the second table and performs paste operation on the cell.

In the application scenario shown above, by applying the technical solution provided by the embodiment of the present disclosure, a range formed by a cell in column B and row 2, a cell in column D and row 2 and a cell in column E and row 2 in Table 2 may be determined as the target copy range, and a range formed by a cell in column B and row 2, a cell in column C and row 2 and a cell in column F and row 2 in Table 1 may be determined as the target paste range, and a paste cell corresponding to each copy cell in the target copy range are determined in the target paste range, and cell data in each copy cell is then filled into the corresponding paste cell.

In some embodiments, a cell in column B and row 2 in Table 1 is determined as a paste cell corresponding to a copy cell in column D and row 2 in Table 2, and cell data in the copy cell in column D and row 2 in Table 2 is then filled into the paste cell in column B and row 2 in Table 1.

In some embodiments, a cell in column D and row 2 in Table 1 is determined as a paste cell corresponding to a copy cell in column E and row 2 in Table 2, and cell data in the copy cell in column E and row 2 in Table 2 is then filled into the paste cell in column D and row 2 in Table 1.

In some embodiments, a cell in column C and row 2 in Table 1 is determined as a paste cell corresponding to the copy cell in column B and row 2 in Table 2, and cell data in the copy cell in column B and row 2 in Table 2 is then filled into the paste cell in column C and row 2 in Table 1.

As such, the user can perform only one copy operation to fill an age, a mobile number and an email address of ZHANG San in Table 2 into Table 1, which greatly saves user operations compared with related art.

How to determine the target copy range in the first table and determine the target paste range in the second table will be explained below through different embodiments, and are not described in detail here.

In the technical solution provided by the embodiment of the present disclosure, the target copy range is determined in the first table in response to a copy operation on the first table, the paste cell corresponding to each copy cell in the target copy range is determined in the second table, cell data in each copy cell is filled into the corresponding paste cell, multiple groups of copy cells and paste cells corresponding to each other are determined in a source table where source data to be copied is located and a table to be filled, and multiple data are copied and pasted between the source table and the table to be filled, thereby improving efficiency of data transfer between the two tables, solving a technical problem in the related art that efficiency of data transfer is low since copying and pasting multiple data between two tables completely relies on manually repeated copy and paste operations, and effectively reducing possible mis-operations caused by repeated manual operations.

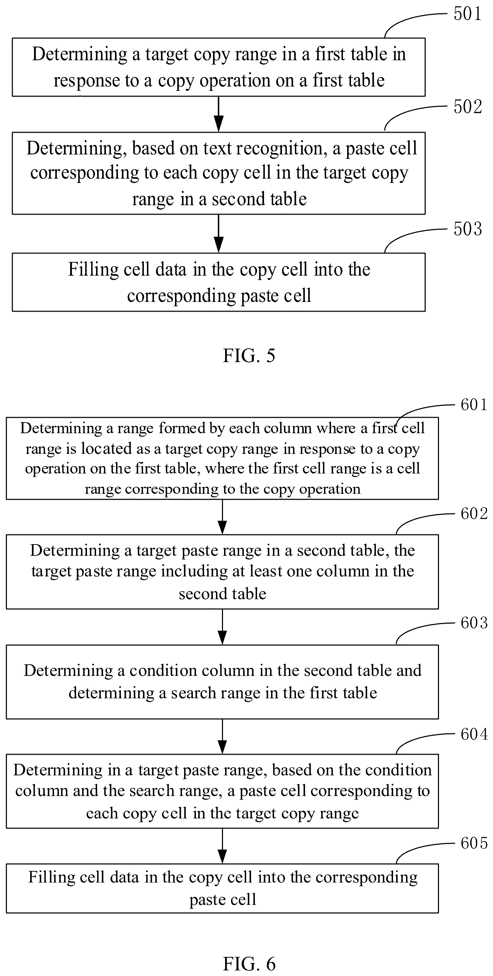

Referring to FIG. 5, FIG. 5 is an example flowchart of another method for filling data in a table according to an embodiment of the present disclosure. As shown in FIG. 5, the method includes the following steps:
step 501: determining a target copy range in a first table in response to a copy operation on the first table;
step 502: determining, based on text recognition, a paste cell corresponding to each copy cell in the target copy range in a second table; and
step 503: filling cell data in the copy cell into the corresponding paste cell.

The first table mentioned above refers to a table where source data is in, which may be a worksheet or a range in a worksheet, and is not specifically limited here.

The copy operation on the first table may be a copy operation on one or more selected cells in the first table. In a case where there are multiple selected cells, the multiple selected cells may be cells in the same row (including that the entire row is selected), or cells in the same column (including that the entire column is selected), or cells in multiple rows and columns, which are not specifically limited here.

In some embodiments, a user may select one or more cells in the first table by manipulating a mouse. In some embodiments, a user may first select a cell by manipulating a mouse, then hold down a left button of the mouse and drag the mouse, and the cells which a cursor passes become the selected cell until the user releases the left button of the mouse.

In some embodiments, a user may select one or more cells in the first table by specifying a cell reference (including a row number and a column letter, referred to as a cell reference). In some embodiments, assuming that the cell reference specified by the user is A5, a cell in row 5 of column A is determined as the selected cell. In some embodiments, assuming that the cell reference specified by the user is A5:B6, four cells in row 5 of column A, row 6 of column A, row 5 of column B, and row 6 of column B are determined as the selected cells.

The target copy range mentioned above is composed of multiple cells in the first table. It can be seen therefrom that the technical solution provided by the embodiment of the present disclosure can be applied to copy and paste batch cell data.

In some embodiments, the target copy range is determined in the first table when a copy operation on the first table is detected. Generally, the target copy range may include other cells in addition to the selected cells mentioned above, that is, the cell range corresponding to the copy operation (hereinafter referred to as a first cell range for convenience of description).

In some embodiments, the target copy range includes a range formed by columns where the first cell range is located. That is to say, determining the target copy range in the first table may include: determining a range formed by columns where the first cell range is located as the target copy range.

For ease of understanding, a specific example of the embodiment is given in conjunction with a second table to be filled in the following explanation of step 102, which is not described in detail here.

In some embodiments, the target copy range includes the first cell range and a range formed by cells in a row where the first cell range is located that meet certain conditions.

For ease of understanding, a specific example of the embodiment is given in conjunction with a second table to be filled in the following explanation of step 102, which is not described in detail here.

It can be seen that the technical solution provided by the embodiment of the present disclosure is different from the related art in which the copy range depends entirely on the user's selection operation, which can automatically expand the copy range, automatically fill the table and save user operations.

In addition, in some embodiments, whether to expand the copy range is selected based on user operations. For example, a reminder message for indicating the expansion of the copy range is output through a user interaction interface (such as a pop-up reminder message). If the user triggers an indication operation to allow the expansion of the copy range in response to the reminder message, the copy range is expanded. If the user triggers an indication operation to refuse the expansion of the copy range in response to the reminder message, the copy range is not expanded and only the cell range selected by the user through the copy operation is determined as the copy range. A phenomenon that the user's original intention is violated, that is, the user only wants to copy and paste the selected cell range but redundantly copies and pastes other cell ranges together can be avoided through the above processing.

The second table mentioned above refers to a target table to be filled, which may be a worksheet or a range in a worksheet, and is not specifically limited here. In some embodiments, the first table and the second table may be different worksheets, different ranges in the same worksheet, or ranges in different worksheets, which are not specifically limited here.

In some embodiments, after performing a copy operation on the first table, the user may perform a paste operation on another table, and determine the table corresponding to the paste operation as the second table.

The paste operation mentioned above may be a paste operation on one or more selected cells in the second table. In a case where there are multiple selected cells, the multiple selected cells may be cells in the same row (including that the entire row is selected), or cells in the same column (including that the entire column is selected), or cells in multiple rows and columns, which are not specifically limited here.

The paste cell mentioned above refer to a cell to be filled in the second table, and whether the paste cell is empty is not specifically limited here. That is to say, even if the paste cell originally has cell data, the technical solution provided by the embodiment of the present disclosure may also be applied to replace (or overwrite) the original cell data in the paste cell.

In some embodiments, the paste cell may include a cell corresponding to the paste operation mentioned above, or may not include a cell corresponding to the paste operation mentioned above, which are not specifically limited here. It can be seen that in a case where the paste cell does not include the cell corresponding to the paste operation, the technical solution provided by the embodiment of the present disclosure can be applied to automatically determine the paste cell from the second table without relying on user operations, which can reduce the requirements for user operations and improve user experience.

In addition, in the embodiment of the present disclosure, a range composed of all paste cells is referred to as a target paste range.

In some embodiments, the target paste range may be first determined in the second table, and a paste cell corresponding to each copy cell in the target copy range may then be determined in the target paste range. It can be seen that the paste cell in the target paste range and the copy cell in the target copy range are in one-to-one correspondence.

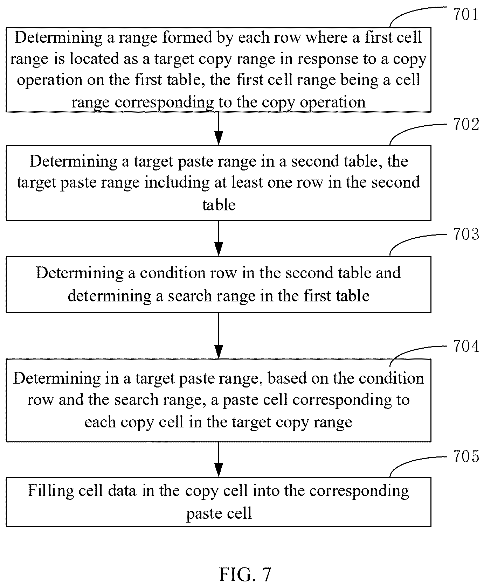

Determining, based on the text recognition, the paste cell corresponding to each copy cell in the target copy range in the target past range mentioned above refers to performing text recognition on the target copy range and a column header and/or a row header in the second table separately to recognize specific text content and semantics and determining a correspondence between the copy cell and the paste cell through the recognized text content and semantics. How to determine, based on the text recognition, the paste cell corresponding to each copy cell in the target copy range in the target past range will be explained below through the specific embodiments shown in FIG. 6 and FIG. 7, and are not described in detail here.

In some embodiments, in a case where the target copy range includes the range formed by each column where the first cell range is located, the target paste range may include at least one column in the second table. In a case where the target copy range includes the first cell range and a range formed by cells that meet certain conditions in a row where the first cell range is located, the target paste range may include at least two cells in the same row in the second table.

In some embodiments, in a case where the target copy range includes the range formed by each row where the first cell range is located, the target paste range may include at least one row in the second table. In a case where the target copy range includes the first cell range and a range formed by cells that meet certain conditions in a column where the first cell range is located, the target paste range may include at least two cells in the same column in the second table.

Referring to FIG. 2, FIG. 2 is a diagram of an application scenario according to an embodiment of the present disclosure. In the application scenario shown in FIG. 2, Table 1 is the second table, and Table 2 is the first table. It is assumed that the user selects a cell in column D and row 3 in the first table and performs copy operation on the cell, and it is assumed that the user selects a cell in column C and row 2 in the second table and performs paste operation on the cell.

In the application scenario shown above, by applying the technical solution provided by the embodiment of the present disclosure, a range formed by a cell in column D in Table 2 may be determined as the target copy range, and a range formed by a cell in column C in Table 1 may be determined as the target paste range, paste cells corresponding to copy cells in the target copy range are determined in the target paste range, and then cell data in the copy cells is filled into the respective paste cells.

In some embodiments, a cell in column C and row 3 in Table 1 is determined as a paste cell corresponding to a copy cell in column D and row 5 in Table 2, and cell data in the copy cell in column D and row 5 in Table 2 is then filled into the paste cell in column C and row 3 in Table 1.

In some embodiments, a cell in column C and row 4 in Table 1 is determined as a paste cell corresponding to a copy cell in column D and row 4 in Table 2, and cell data in the copy cell in column D and row 4 in Table 2 is then filled into the paste cell in column C and row 4 in Table 1.

By analogy, the user can fill the mobile numbers in Table 2 into Table 1 by performing only one copy operation, and can accurately correspond the mobile number to the user, which greatly saves user operations compared with the related art.

How to determine the target copy range in the first table and determine the target paste range in the second table will be explained below through specific embodiments, which are not described in detail here.

Referring to FIG. 3, FIG. 3 is a diagram of another application scenario according to an embodiment of the present disclosure. In the application scenario shown in FIG. 3, Table 1 is the second table, and Table 2 is the first table. It is assumed that the user selects a cell in column B and row 2, a cell in column C and row 2, a cell in column B and row 3 and a cell in column C and row 3 in the first table and performs copy operation on these cells, and it is assumed that the user selects a cell in column B and row 2, a cell in column C and row 2, a cell in column B and row 3 and a cell in column C and row 3 in the second table and performs paste operation on these cells.

In the application scenario shown above, by applying the technical solution provided by the embodiment of the present disclosure, a range formed by cells in columns B and C in Table 2 may be determined as the target copy range, and a range formed by cells in columns B and C in Table 1 may be determined as the target paste range, a paste cell corresponding to each copy cell in the target copy range is determined in the target paste range, and then cell data in each copy cell is filled into the corresponding paste cell.

In some embodiments, a cell in column B and row 2 in Table 1 is determined as a paste cell corresponding to a copy cell in column B and row 2 in Table 2, and cell data in the copy cell in column B and row 2 in Table 2 is then filled into the paste cell in column B and row 2 in Table 1.

In some embodiments, a cell in column C and row 3 in Table 1 is determined as a paste cell corresponding to a copy cell in column C and row 3 in Table 2, and cell data in the copy cell in column C and row 3 in Table 2 is then filled into the paste cell in column C and row 3 in Table 1.

By analogy, the user may perform only one copy operation to fill both the mobile number and gender in Table 2 into Table 1, and can accurately correspond the mobile number and gender to the user, which greatly saves user operations compared with the related art.

How to determine the target copy range in the first table and determine the target paste range in the second table will be explained below through specific embodiments, and are not described in detail here.

Referring to FIG. 4, FIG. 4 is a diagram of yet another application scenario according to an embodiment of the present disclosure. In the application scenario shown in FIG. 4, Table 1 is the second table, Table 2 is the first table. It is assumed that the user selects a cell in column D and row 2 in the first table and performs copy operation on the cell, and it is assumed that the user selects a cell in column B and row 2 in the second table and performs paste operation on the cell.

In the application scenario shown above, by applying the technical solution provided by the embodiment of the present disclosure, a range formed by a cell in column B and row 2, a cell in column D and row 2 and a cell in column E and row 2 in Table 2 may be determined as the target copy range, and a range formed by a cell in column B and row 2, a cell in column C and row 2 and a cell in column F and row 2 in Table 1 may be determined as the target paste range, and a paste cell corresponding to each copy cell in the target copy range are determined in the target paste range, and cell data in each copy cell is then filled into the corresponding paste cell.

In some embodiments, a cell in column B and row 2 in Table 1 is determined as a paste cell corresponding to a copy cell in column D and row 2 in Table 2, and cell data in the copy cell in column D and row 2 in Table 2 is then filled into the paste cell in column B and row 2 in Table 1.

In some embodiments, a cell in column D and row 2 in Table 1 is determined as a paste cell corresponding to a copy cell in column E and row 2 in Table 2, and cell data in the copy cell in column E and row 2 in Table 2 is then filled into the paste cell in column D and row 2 in Table 1.

In some embodiments, a cell in column C and row 2 in Table 1 is determined as a paste cell corresponding to the copy cell in column B and row 2 in Table 2, and cell data in the copy cell in column B and row 2 in Table 2 is then filled into the paste cell in column C and row 2 in Table 1.

As such, the user can perform only one copy operation to fill an age, a mobile number and an email address of ZHANG San in Table 2 into Table 1, which greatly saves user operations compared with related art.

How to determine the target copy range in the first table and determine the target paste range in the second table will be explained below through different embodiments, and are not described in detail here.

In the technical solution provided by the embodiment of the present disclosure, the target copy range is determined in the first table in response to a copy operation on the first table, the paste cell corresponding to each copy cell in the target copy range is determined in the second table based text recognition, cell data in each copy cell is filled into the corresponding paste cell, multiple groups of copy cells and paste cells corresponding to each other are determined based text recognition in a source table where source data to be copied is located and a table to be filled, and multiple data are copied and pasted between the source table and the table to be filled, thereby improving efficiency of data transfer between the two tables, solving a technical problem in the related art that efficiency of data transfer is low since copying and pasting multiple data between two tables completely relies on manually repeated copy and paste operations, and effectively reducing possible mis-operations caused by repeated manual operations.

Referring to FIG. 6, FIG. 6 is an example flowchart of yet another method for filling data in a table according to an embodiment of the present disclosure. The process shown in FIG. 6 includes the following steps based on the process shown in FIG. 1 or FIG. 5 above:
step 601: determining a range formed by each column where a first cell range is located as a target copy range in response to a copy operation on the first table, the first cell range being a cell range corresponding to the copy operation;
step 602: determining a target paste range in a second table, the target paste range including at least one column in the second table;
step 603: determining a condition column in the second table and determining a search range in the first table;
step 604: determining in a target paste range, based on the condition column and the search range, a paste cell corresponding to each copy cell in the target copy range; and
step 605: filling cell data in the copy cell into the corresponding paste cell.

In some embodiments, referring to the application scenario illustrated in FIG. 2, the first cell range is the cell on column D and row 3 in table 2, and the target copy range is a range formed by cells in column D in table 2.

In some embodiments, referring to the application scenario illustrated in FIG. 3, the first cell range is a range formed by the cell in column B and row 2, the cell in column C and row 2, the cell in column B and row 3, and the cell in column C and row 3 in Table 2, and the target copy range is a range formed by cells in columns B and C in table 2.

Other descriptions of step 601 may refer to the description of the embodiments illustrated in FIG. 1 or FIG. 5 above, which are not repeated here.

Since the target copy range includes at least one column in the first table, the target paste range also includes at least one column in the second table accordingly.

In some embodiments, in a case where the number of rows and columns of the second cell range and the first cell range are the same, a range formed by the column where the second cell range is located is determined as the target paste range. The second cell range here is a range corresponding to the paste operation on the second table.

In some embodiments, referring to the application scenario illustrated in FIG. 2, the first cell range is a range formed by a cell in column D and row 3 in Table 2, and both the number of rows and the number of columns are 1. The second cell range is a range formed by a cell in column C and row 2 in Table 1, and both the number of rows and the number of columns are 1. Based on the above description, in a case where the number of rows and the number of columns of the second cell range and the first cell range are the same, the range formed by the column where the second cell range is located, that is, the range formed by column C in Table 1, is determined as the target paste range.

In some embodiments, referring to the application scenario illustrated in FIG. 3, the first cell range is a range formed by the cell in column B and row 2, the cell in column C and row 2, the cell in column B and row 3, and the cell in column C and row 3 in Table 2, and both the number of rows and the number of columns are 2. The second cell range is a range formed by the cell in column B and row 2, the cell in column C and row 2, the cell in column B and row 3, and the cell in column C and row 3 in Table 1, and both the number of rows and the number of columns are 2. Based on the above description, in a case where the number of rows and the number of columns of the second cell range and the first cell range are the same, a range formed by columns where the second cell range is located, that is, a range formed by columns B and C in Table 1, is determined as the target paste range.

In some embodiments, determining the target paste range in the second table may include: performing the following processing on each column where the first cell range is located: determining a column header of the column, and in a case of determining that there is a target column header matching the column header among header rows of the second table, determining the range formed by the column corresponding to the target column header as the target paste range.

In some embodiments, the above matching refers to being completely the same, or having similar text semantics. For example, although texts of two column headers "Mobile Number" and "Phone Number" are not the same, the text semantics of the two are similar, and the two column headers may be regarded as matching.

In some embodiments, referring to FIG. 4, it is assumed that the first cell range is a range formed by a cell in column D and row 2 and a cell in column E and row 2 in Table 2, then based on the above description, the following processing is performed on column D in Table 2: determining the column header of the column, specifically "mobile number", determining there is a target column header, specifically "mobile number", matching the column header in the header row of Table 1, and determining a range with the column header of "mobile number", namely a range formed by column B in Table 1 as the target paste range; the following processing is performed on column E in Table 2: determining the column header of the column, specifically "email", determining there is a target column header, specifically "email", matching the column header in the header row of Table 1, and determining a range with the column header of "email", namely a range formed by column D in Table 1 as the target paste range.

As may be seen from the above examples, the technical solution provided by the embodiment of the present disclosure may be applied to determine the target paste range in the second table without performing a selection operation and a paste operation on the cells in the second table by the user, which simplifies the user operation.

In some embodiments, in a case where the first cell range is located in at least two discontinuous columns, the technical solution provided by the above embodiment can also be applied to determine the target paste range in the second table, which reduces restrictions on user operations and can improve the user experience.

In addition, it should be noted that the embodiment provided by the present disclosure describes the technical solution for a table arranged vertically (i.e., a table in which each row corresponds to an object and each column corresponds to a field). Based on the embodiment of the present disclosure, it is easy for those skilled in the art to conceive of making corresponding modification to the technical solution for a table arranged horizontally. In some embodiments, for a table arranged horizontally (i.e., a table in which each column corresponds to an object and each row corresponds to a field), the range formed by each row where the first cell range is located may be determined as the target copy range, and accordingly, the target paste range includes at least one row in the second table, and the above column header is modified to a row header accordingly. The embodiment of the present disclosure does not specifically limit the arrangement of the applied table.

In some embodiments, in a case where both the first cell range and the second cell range are located in only one row, determining the condition column in the second table and determining a search range in the first table may include: determining, based on text recognition, the condition column in the second table, and determining the search range in the first table. Specifically, determining, based on text recognition, a first cell data set corresponding to a row where the first cell range is located and a second cell data set corresponding to a row where the second cell range is located, then determining the same item in the first cell data set and the second cell data set, and determining a column where the same item is located in the second table as the condition column, and determining a column where the same item is located in the first table as the search range. Here, the same item refers to two data items with exactly the same content.

In some embodiments, referring to the application scenario illustrated in FIG. 2, both the first cell range and the second cell range are located in only one row, the first cell data set corresponding to the row where the first cell range is located is {name=LI Si, age=29, gender=male, mobile number=138000001, email=ls@**.com}, and the second cell data set corresponding to the row where the second cell range is located is {name=LI Si, signed-up events=bicycle}. By comparison, it can be seen that the same item in the first cell data set and the second cell data set is "name=LI Si". Further, the column A where "name=LI Si" is located in Table 1 is determined as the condition column, and the column A where "name=LI Si" is located in Table 2 is determined as the search range.

In some embodiments, whether two data items in the first cell data set and the second cell data set are the same item may be determined referring to the column headers of the columns where the two data items are located. In some embodiments, in a case where the two data items are the same and column headers corresponding thereto also match, the two data items are determined to be the same. Accuracy can be improved through this processing.

In some embodiments, in a case where both the first cell range and the second cell range are located in N (N is a natural number greater than 1) rows, determining the condition column in the second table and determining the search range in the first table may include: performing the following processing on each row where the first cell range is located, determining a third cell data set corresponding to the row, determining a corresponding row of the row in the second cell range, and determining a fourth cell data set corresponding to the corresponding row, then determining a same item set in the third cell data set and the fourth cell data set, finally determining a common header of the same item set corresponding to each row where the first cell range is located, determining a column where the common header is in the second table as the condition column, and determining a column where the common header is in the first table as the search range. The corresponding row in the second cell range of the row where the first cell range is located refers to a row in the second cell range with a same relative row number as a row where the first cell range is located in the first cell range. In some embodiments, the corresponding row of a first row (i.e., row 2 in Table 2) where the first cell range is located in the second cell range is a first row (i.e., row 2 in Table 1) in the second cell range.

In some embodiments, referring to the application scenario illustrated in FIG. 3, both the first cell range and the second cell range are located in two rows, where the following processing is performed on the first row where the first cell range is located: determining that a third cell data set corresponding to the row is {name=A, mobile number =111, gender=male, years of employment=3}, determining a corresponding row of the row in the second cell range, determining that a fourth cell data set corresponding to the corresponding row is {name=A, years of employment=1 }, and determining that the same item set in the third cell data set and the fourth cell data set is {name=A}.
the following processing is performed on the second row where the first cell range is located: determining that a third cell data set corresponding to the row is {name=B, mobile number =222, gender=female, years of employment=2}, determining a corresponding row of the row in the second cell range, and determining that a fourth cell data set corresponding to the row is {name=B, years of employment=2}, then determining that the same item set in the third cell data set and the fourth cell data set is {name=B, years of employment=2}, and
finally determining a common header, specifically "name" of the two same item sets and determining, and based on the above description, determining column A in Table 1 as the condition column, and a column where "name" is in Table 2 as the search range.

In some embodiments, determining in the target paste range, based on the condition column and the search range, the paste cell corresponding to each copy cell in the target copy range may include: determining each row included in the target paste range as a to-be-processed row, and performing the following processing on the to-be-processed row: determining cell data located in the to-be-processed row in the condition column as condition data, determining the condition data in the search range, determining a row where the condition data is located as a target row, and determining a range formed by a copy cell located in the target row in the target copy range as a sub-target copy range corresponding to the to-be-processed row. Afterwards, performing the following processing on each copy cell in the sub-target copy range: determining a target paste cell that meets set conditions from the to-be-processed row, where the set conditions refer to that the paste cell and the copy cell have the same relative position used to characterize a position of the paste cell in the to-be-processed row, or a position of the copy cell in the sub-target copy range; and determining the target paste cell as the paste cell corresponding to the copy cell.

In some embodiments, referring to the application scenario illustrated in FIG. 2, taking row 2 in Table 1 as the to-be-processed row as an example, in the condition column A, the cell data located in row 2 is "LI Si", and "LI Si" is determined as the condition data. The condition data "LI Si" is then determined in the search range, namely column A in Table 2, and the row where the condition data "LI Si" is located, namely row 3, is determined as the target row. Then, the target copy range, namely a range formed by a copy cell located in row 3 in column D in Table 2, namely a cell in column D and row 3 is determined as a sub-target copy range corresponding to the to-be-processed row, namely row 2 in Table 1.

Afterwards, for a copy cell in the sub-target copy range, that is, the cell in column D and row 3, there is only one paste cell in the to-be-processed row, the only one paste cell in the to-be-processed row may be determined as the paste cell corresponding to the copy cell.

In some embodiments, referring to the application scenario illustrated in FIG. 3, taking row 2 in Table 1 as the to-be-processed row as an example, in the condition column A, the cell data located in row 2 is "A", and "A" is determined as the condition data. The condition data "A" is then determined in the search range, that is, column A in Table 2, and the row where the condition data "A" is located, that is, row 2 in Table 2, is determined as the target row. A range formed by copy cells located in row 2 in the target copy range, that is, columns B and C in Table 2, that is, a cell in column B and row 2 and a cell in column C and row 2 is determined as a sub-target copy range corresponding to the to-be-processed row, that is, row 2 in Table 1.

At this time, there are two copy cells in the sub-target copy range and two paste cells in the to-be-processed row, and it is necessary to further determine a corresponding relationship between the two copy cells and the two paste cells.

In some embodiments, for the copy cell in column B and row 2 in Table 2, the copy cell is a first cell from left to right in the sub-target copy range, that is, a relative position of the copy cell in the sub-target copy range is a first cell from left to right. Based on the above description, a first cell from left to right in the to-be-processed row, that is, the paste cell in column B and row 2 in Table 1, is determined as the paste cell corresponding to the copy cell.

Similarly, for the copy cell in column C and row 2 in Table 2, the copy cell is a second cell from left to right in the sub-target copy range, that is, a relative position of the copy cell in the sub-target copy range is a second cell from left to right. Based on the above description, a second cell from left to right in the to-be-processed row, that is, the paste cell in column C and row 2 in Table 1, is determined as the paste cell corresponding to the copy cell.

As may be seen from the above examples, the technical solution provided by the embodiment of the present disclosure is not limited to automatically filling multiple rows and one column of data, but also includes automatically filling multiple rows and multiple columns of data.

Through the process shown in FIG. 6, it is possible to automatically fill multiple rows of data on the table without performing repeated copy and paste operations multiple times by the user, thereby improving efficiency of data transfer between the two tables and effectively reducing possible mis-operations caused by repeated manual operations.

It should be noted that the process shown in FIG. 6 is a description of the technical solution for a table arranged vertically. Based on the process shown in FIG. 6, it is easy for those skilled in the art to conceive of making corresponding modification to the technical solution for a table arranged horizontally. In some embodiments, for a table arranged horizontally, the above condition column may be modified to a condition row, and the above corresponding search range is also a range formed by a cell in the row. Specifically, referring to FIG. 7, FIG. 7 is an example flowchart of yet another method for filling data in a table according to an embodiment of the present disclosure, including the following steps:
step 701: determining a range formed by each row where a first cell range is located as a target copy range in response to a copy operation on the first table, the first cell range being a cell range corresponding to the copy operation;
step 702: determining a target paste range in a second table, the target paste range including at least one row in the second table;
step 703: determining a condition row in the second table and determining a search range in the first table;
step 704: determining in a target paste range, based on the condition row and the search range, a paste cell corresponding to each copy cell in the target copy range; and
step 705: filling cell data in the copy cell into the corresponding paste cell.

In some embodiments, determining the target paste range in the second table may include: performing the following processing on each row where the first cell range is located: determining a row header of the row, and in a case of determining that there is a target row header matching the row header among header columns of the second table, determining the range formed by the row corresponding to the target row header as the target paste range.

As for the detailed description of steps 701 to 705, those skilled in the art may refer to the relevant description in the embodiment shown in FIG. 6 and make logical modifications on this basis, and thus details of steps 701 to 705 are not described here.

The process shown in FIG. 7 is for a horizontally arranged table which is a corresponding modification to the process shown in FIG. 6, and it is possible to automatically fill multiple columns of data on the table without performing repeated copy and paste operations multiple times by the user.

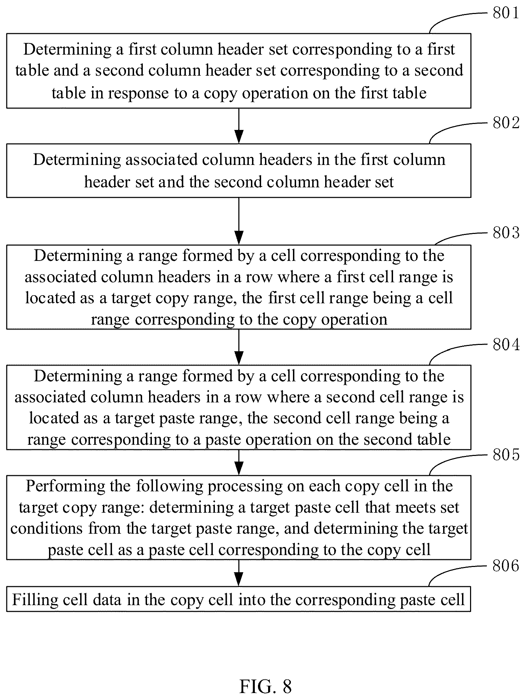

Referring to FIG. 8, FIG. 8 is an example flowchart of still another method for filling data in a table according to an embodiment of the present disclosure. The process shown in FIG. 8 includes the following steps based on the process shown in FIG. 1:
step 801: determining a first column header set corresponding to a first table and a second column header set corresponding to a second table in response to a copy operation on the first table;
step 802: determining associated column headers in the first column header set and the second column header set;
step 803: determining a range formed by a cell corresponding to the associated column headers in a row where a first cell range is located as a target copy range, the first cell range being a cell range corresponding to the copy operation;
step 804: determining a range formed by a cell corresponding to the associated column headers in a row where a second cell range is located as a target paste range, the second cell range being a range corresponding to a paste operation on the second table;
step 805: performing the following processing on each copy cell in the target copy range: determining a target paste cell that meets set conditions from the target paste range, and determining the target paste cell as a paste cell corresponding to the copy cell, the set conditions referring to a column header corresponding to the paste cell and the copy cell; and
step 806: filling cell data in the copy cell into the corresponding paste cell.

Taking the application scenario shown in FIG. 4 as an example, Table 2 is the first table, Table 1 is the second table, a first column header set corresponding to the first table is {name, age, gender, mobile number, email}, and a second column header set corresponding to the second table is {name, mobile number, age, email, whether the household registration is local, native place}.

In some embodiments, the associated column headers refer to the text being exactly the same, or the text semantics being similar. In some embodiments, although the two column headers "Mobile Number" and "Phone Number" are not the same, the text semantics thereof are similar, and the two column headers may be regarded as the associated column headers.

In an example of the above step 801, the associated column headers in the first column header set and the second column header set include name, age, mobile number, and email.

In an example of the above step 801, a range formed by the cell in column B and row 2, the cell in column C and row 2, the cell in column D and row 2 and the cell in column E and row 2 in Table 2 shown in FIG. 4 is determined as the target copy range.

In an example of the above step 801, a range formed by the cell in column B and row 2, the cell in column C and row 2, and the cell in column D and row 2 in Table 1 shown in FIG. 4 is determined as the target paste range.

In the example of the above steps, the cell in column B and row 2 in Table 1 is determined as a paste cell corresponding to the copy cell in column D and row 2 in Table 2; the cell in column C and row 2 in Table 1 is determined as a paste cell corresponding to the copy cell in column B and row 2 in Table 2; and the cell in column D and row 2 in Table 1 is determined as a paste cell corresponding to the copy cell in column E and row 2 in Table 2.

In the example of the above steps, age "35" of ZHANG San in Table 2 is filled into the cell in column C and row 2 in Table 1, the mobile number "138000000" of ZHANG San in Table 2 is filled into the cell in column B and row 2 in Table 1, and the email address "zs@**.com" of ZHANG San in Table 2 is filled into the cell in column D and row 2 in Table 1.

Through the process shown in FIG. 7, it is possible to automatically fill multiple columns of data on the table without performing repeated copy and paste operations multiple times by the user and the multiple columns may not be continuous, thereby improving the efficiency of data transfer between the two tables and effectively reducing possible mis-operations caused by repeated manual operations.

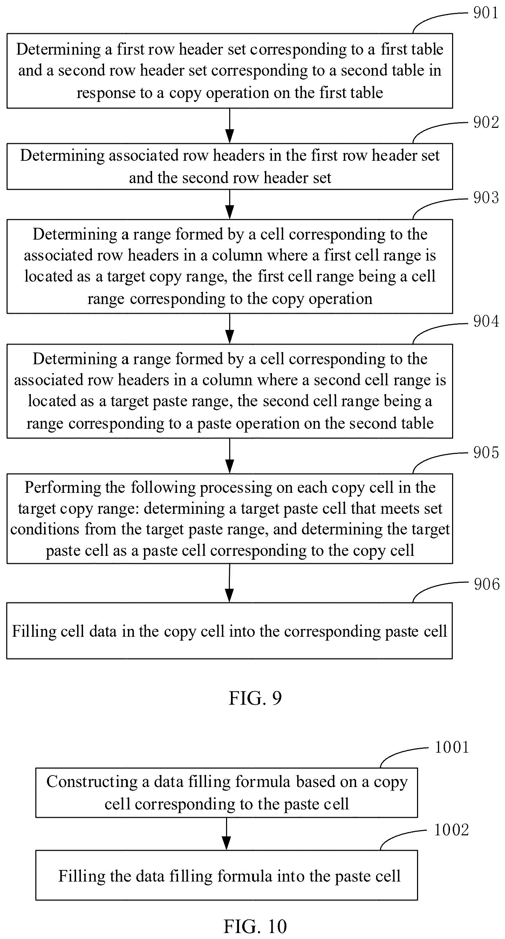

It should be noted that the process shown in FIG. 8 is also a description of the technical solution for a table arranged vertically. Based on the process shown in FIG. 8, it is easy for those skilled in the art to conceive of making corresponding modification to the technical solution for a table arranged horizontally. In some embodiments, for the table arranged horizontally, the above column header may be modified to row header. Specifically, referring to FIG. 9, FIG. 9 is an example flowchart of a method for filling data in a table according to an embodiment of the present disclosure, including the following steps:
step 901: determining a first row header set corresponding to a first table and a second row header set corresponding to a second table in response to a copy operation on the first table;
step 902: determining associated row headers in the first row header set and the second row header set;
step 903: determining a range formed by a cell corresponding to the associated row headers in a column where a first cell range is located as a target copy range, the first cell range being a cell range corresponding to the copy operation;
step 904: determining a range formed by a cell corresponding to the associated row headers in a column where a second cell range is located as a target paste range, the second cell range being a range corresponding to a paste operation on the second table;
step 905: performing the following processing on each copy cell in the target copy range: determining a target paste cell that meets set conditions from the target paste range, and determining the target paste cell as a paste cell corresponding to the copy cell; where the set conditions refer to a row header where the paste cell corresponds to the copy cell; and
step 906: filling cell data in the copy cell into the corresponding paste cell.

As for the detailed description of steps 901 to 906, those skilled in the art may refer to the relevant description in the embodiment shown in FIG. 8 and make logical modifications on this basis, and details of steps 901 to 906 are not described here.

The process shown in FIG. 9 is for a horizontally arranged table which is a corresponding modification to the process shown in FIG. 8, and it is possible to automatically fill multiple rows of data on the table without performing repeated copy and paste operations multiple times by the user.

Referring to FIG. 10, FIG. 10 is an example flowchart of yet another method for filling data in a table according to an embodiment of the present disclosure. The process shown in FIG. 10 describes how to fill the cell data in each copy cell into the corresponding paste cell based on any of the above processes. The method includes the following steps:
step 1001: constructing a data filling formula based on a copy cell corresponding to the paste cell; and
step 1002: filling the data filling formula into the paste cell.

The above data filling formula is used to indicate that the cell data in the corresponding copy cell is presented in the paste cell.

In some embodiments, referring to the application scenario illustrated in FIG. 2, the cell in column C and row 3 in Table 1 is a paste cell corresponding to the copy cell in column D and row 5 in Table 2, and the following data filling formula may be then constructed for the paste cell in column C and row 3 in Table 1:
XLOOKUP(A2, Table 2!A:A, Table 2!D:D).

In the above data filling formula, A2 represents that the data in column A and row 2 in Table 1 is condition data. Table 2!A:A represents that a search range is column A in Table 2, and Table 2!D:D represents that a return range is column D in Table 2.

In some embodiments, the above data filling formula represents: searching for the condition data "LI Si" in column A of Table 2, and presenting the cell data corresponding to "LI Si" in column D of Table 2 in the paste cell. As such, the mobile number of LI Si in Table 2 is filled into the information corresponding to LI Si in Table 1.

Continuing to refer to the application scenario illustrated in FIG. 2, the cell in column C and row 4 in Table 1 is a paste cell corresponding to the copy cell in column D and row 4 in Table 2, and the following data filling formula may be constructed for the paste cell in column C and row 4 in Table 1:
XLOOKUP(A4, Table 2!A:A, Table 2!D:D).

The above data filling formula represents: searching for the condition data "WANG Wu" in column A of Table 2, and present the cell data corresponding to "WANG Wu" in column D of Table 2 in the paste cell. As such, the mobile number of WANG Wu in Table 2 is filled into the information corresponding to WANG Wu in Table 1.

In some embodiments, referring to the application scenario illustrated in FIG. 4, the cell in column B and row 2 in Table 1 is a paste cell corresponding to the copy cell in column D and row 2 in Table 2, and the following data filling formula may be constructed for the paste cell in column B and row 2 in Table 1:
YLOOKUP(B1, Table 2!1:1, Table 2!2:2).

B1 in the above data filling formula represents that the data in column B and row 1 in Table 1 is a condition column header. Table 2!1:1 represents that a search range is a header row in Table 2, and Table 2!2:2 represents that a return range is row 2 in Table 2.

In some embodiments, the above data filling formula represents: searching for a cell of which a corresponding header matches the condition column header "mobile number" in row 2 of Table 2, and presenting cell data of the cell in the paste cell. As such, the mobile number of ZHANG San in Table 2 is filled into the information corresponding to ZHANG San in Table 1.

Continuing to refer to the application scenario illustrated in FIG. 4, the cell in column C and row 2 in Table 1 is a paste cell corresponding to the copy cell in column B and row 2 in Table 2, and the following data filling formula may be constructed for the paste cell in column C and row 2 in Table 1:
YLOOKUP(C1, Table 2!1:1, Table 2!2:2).

In some embodiments, the above data filling formula represents: searching for a cell of which a corresponding header matches the condition column header "age" in row 2 of Table 2, and presenting cell data in the cell in the paste cell. As such, the age of ZHANG San in Table 2 is filled into the information corresponding to ZHANG San in Table 1.

In some embodiments, the process shown in FIG. 5 and the process shown in FIG. 6 may be combined and applied to automatically fill multiple rows and columns of data in the table at the same time to further improve the efficiency of data transfer between the two tables.

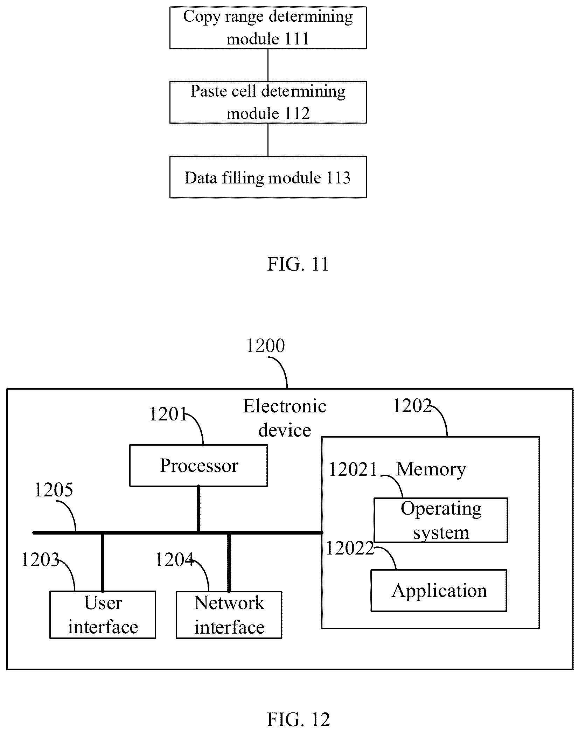

Referring to FIG. 11, FIG. 11 is an example block diagram of an apparatus for filling data in a table according to an embodiment of the present disclosure. As shown in FIG. 11, the apparatus includes:
a copy range determining module 111, configured to determine a target copy range in a first table in response to a copy operation on the first table;
a paste cell determining module 112, configured to determine a paste cell corresponding to each copy cell in the target copy range in a second table, where the copy cell and the corresponding paste cell have at least one associated target parameter; and
a data filling module 113, configured to fill cell data in each copy cell into the corresponding paste cell to each copy cell respectively.

In some embodiments, the paste cell determining module 112 is configured to determine a paste cell corresponding to each copy cell in the target copy range in a second table based on text recognition.

In some embodiments, the copy range determining module 111 is configured to determine a range formed by columns where a first cell range is located as the target copy range, the first cell range being a cell range corresponding to the copy operation.

In some embodiments, the paste cell determining module 112 includes:
a paste range determining unit configured to determine a target paste range in a second table, the target paste range including at least one column in the second table;
a condition determining unit configured to determine a condition column in the second table and determine a search range in the first table; and
a cell determining unit configured to determine in the target paste range, based on the condition column and the search range, a paste cell corresponding to each copy cell in the target copy range.

In some embodiments, the cell determining unit includes:
a condition data determining sub-unit configured to determine each row included in the target paste range as a to-be-processed row and perform following processing on the to-be-processed row: determining cell data located in the to-be-processed row in the condition column as condition data;
a target row determining sub-unit configured to determine the condition data in the search range and determine a row where the condition data is located as a target row;
a sub-target copy range determining sub-unit configured to determine a range formed by a copy cell located in the target row in the target copy range as a sub-target copy range corresponding to the to-be-processed row; and
a target paste cell determining sub-unit configured to perform following processing on each copy cell in the sub-target copy range:
   determining a target paste cell that meets set conditions from the to-be-processed row, in which the set conditions refer to that the paste cell and the copy cell have the same relative position configured to characterize a position of the paste cell in the to-be-processed row, or a position of the copy cell in the sub-target copy range; and
   determining the target paste cell as the paste cell corresponding to the copy cell.

In some embodiments, the paste range determining unit is configured to:
in a case where numbers of rows and columns of a second cell range and the first cell range are the same, determining a range formed by a column where the second cell range is located as a target paste range, the second cell range being a range corresponding to a paste operation on the second table.

In some embodiments, the paste range determining unit is configured to perform following processing on each column where the first cell range is located:
determining a column header of the column; and
in a case where it is determined that there is a target column header matching the column header among header rows of the second table, determining the range formed by a column corresponding to the target column header as a target paste range.

In some embodiments, the condition data determining sub-unit is configured to:
in a case where both the first cell range and the second cell range are located in only one row, determine a first cell data set corresponding to a row where the first cell range is located and a second cell data set corresponding to a row where the second cell range is located, the second cell range being a range corresponding to a paste operation on the second table; and
determine a same item in the first cell data set and the second cell data set, determine a column where the same item is located in the second table as a condition column, and determine a column where the same item is located in the first table as a search range.

In some embodiments, the condition data determining sub-unit is configured to:
in a case where both the first cell range and the second cell range are located in N rows, N being a natural number greater than 1, perform following processing on each row where the first cell range is located, the second cell range being a range corresponding to a paste operation on the second table:
determining a third cell data set corresponding to the row;
determining a corresponding row of the row in the second cell range, and determining a fourth cell data set corresponding to the corresponding row;
determining a same item set in the third cell data set and the fourth cell data set; and
determining a same item in the same item set corresponding to each row where the first cell range is located, determining a column where the same item is in the second table as the condition column, and determining a column where the same item is in the first table as a search range.

In some embodiments, the copy range determining module 111 is configured to:
determine a first column header set corresponding to the first table and a second column header set corresponding to a second table;
determine associated column headers in the first column header set and the second column header set; and
determine a range formed by a cell corresponding to the associated column headers in a row where the first cell range is located as a target copy range, the first cell range being a cell range corresponding to the copy operation.

In some embodiments, the paste cell determining module 112 includes:
a paste range determining unit configured to determine a target paste range in a second table, the target paste range including at least two cells in a same row in the second table;
a paste cell determining unit configured to perform following processing on each copy cell in the target copy range:
   determining a target paste cell that meets set conditions from the target paste range, the set conditions referring to a column header corresponding to the paste cell and the copy cell; and
   determining the target paste cell as a paste cell corresponding to the copy cell.

In some embodiments, the paste range determining unit is configured to determine a range formed by a cell corresponding to the associated column headers in a row where a second cell range is located as a target paste range, the second cell range being a range corresponding to a paste operation on the second table.

In some embodiments, the data filling module 113 is configured to perform following processing on the paste cell:
constructing a data filling formula based on the copy cell corresponding to the paste cell; and
filling the data filling formula into the paste cell, in which
the data filling formula is configured to indicate that the cell data in the corresponding copy cell is presented in the paste cell.

FIG. 12 is a structure diagram of an electronic device according to an embodiment of the present disclosure. The electronic device shown in FIG. 12 includes: at least one processor 1201, a memory 1202, at least one network interface 1204 and another user interface 1203. Various components in the electronic device 1200 are coupled together through a bus system 1205. It can be understood that the bus system 1205 is configured to realize connection communication between these components. The bus system 1205 includes a power bus, a control bus and a status signal bus in addition to a data bus. But for sake of clarity, various buses are all referred to as the bus system 1205.

In some embodiments, the user interface 1203 may include a display, a keyboard or a clicking device (such as a mouse, a trackball, a touch panel or a touch screen).

It can be understood that the memory 1202 in the embodiment of the present disclosure may be a volatile memory or a nonvolatile memory, or may include both volatile and nonvolatile memories. The nonvolatile memory can be a read-only memory (ROM), a programmable read-only memory (PROM), an erasable programmable read-only memory (EPROM), an electrically erasable programmable read-only memory (EEPROM), or a flash memory. The volatile memory may be a random consulting memory (RAM), which is used as an external cache. By way of example, but not limitation, many forms of RAM are available, such as a static random consulting memory (SRAM), a dynamic random consulting memory (DRAM), a synchronous DRAM (SDRAM), a double data rate SDRAM (DDRSDRAM), an enhanced SDRAM (ESDRAM), a synch link DRAM (SLDRAM) and a direct Rambus RAM (DRRAM). The memory 1202 described herein is intended to include, but is not limited to, these and any other suitable types of memory.

In some embodiments, the memory 1202 stores following elements, executable units or data structures, or subsets thereof, or extended sets thereof: an operating system 12021 and an application program 12022.

In some embodiments, the operating system 12021 includes various system programs, such as a framework layer, a core library layer and a driver layer, which are used to realize various basic services and to handle hardware-based tasks. The application program 12022 includes various application programs, such as a Media Player and a Browser, which are used to realize various application services. An application program for implementing the method of the embodiment of the present disclosure may be included in the application program 12022.

In some embodiments, by calling programs or instructions stored in the memory 1202, specifically, programs or instructions stored in the application program 12022, the processor 1201 is configured to perform steps of the method according to the method embodiments, which for example include:
determining a target copy range in a first table in response to a copy operation on the first table;
determining a paste cell corresponding to each copy cell in the target copy range in a second table, in which the copy cell and the corresponding paste cell have at least one associated target parameter; and
filling cell data in the copy cell into the corresponding paste cell.

The method disclosed in the embodiment of the present disclosure can be applied to the processor 1201 or implemented by the processor 1201. The processor 1201 may be an integrated circuit chip with signal processing capability. In an implementation process, steps of the above method can be completed by an integrated logic circuit of hardware or an instruction in a form of software in the processor 1201. The processor 1201 may be a general processor, a digital signal processor (DSP), an application specific integrated circuit (ASIC), a field programmable gate array (FPGA) or other programmable logic devices, discrete gate or transistor logic devices, or discrete hardware components. The methods, steps and logic blocks disclosed in the embodiments of the present disclosure can be implemented or executed. The general processor can be a microprocessor or any conventional processor. Steps of the method disclosed in the embodiment of the present disclosure can be directly embodied to be executed and completed by a hardware decoding processor, or to be executed and completed by a combination of hardware and software units in the decoding processor. Software units can be located in a random consulting memory, a flash memory, a read-only memory, a programmable read-only memory or an electrically erasable programmable memory, registers and other mature storage media in the art. The storage medium is located in the memory 1202, and the processor 1201 reads information in the memory 1202 to complete steps of the above method in combination with its hardware.

It can be understood that the embodiments described herein can be implemented in hardware, software, firmware, middleware, microcode or a combination thereof. For hardware implementations, the processing unit can be implemented in one or more specific integrated circuits (ASICs), Digital Signal Processing (DSPs), DSP devices (DSPDs), Programmable Logic Devices (PLDs), Field-Programmable Gate Arrays (FPGAs), general processors, controllers, microcontrollers, microprocessors, other electronic units for performing above functions of the present disclosure, or a combination thereof.

For software implementations, technologies described herein can be realized by units that implement functions described herein. Software codes can be stored in the memory and executed by the processor. The memory may be implemented in the processor or external to the processor.

The electronic device provided in the embodiments may be the electronic device shown in FIG. 12, and can execute all steps of the method for filling data in a table as described in the above embodiments, so as to achieve technical effects of the method for filling data in a table as described in the above embodiments, which can refer to related description of the above embodiments for details and is not repeated here for brevity.

An embodiment of the disclosure further provides a storage medium (computer readable storage medium). The storage medium here stores one or more programs. The storage medium may include a volatile memory, such as a random consulting memory; the memory may also include a non-volatile memory, such as a read-only memory, a flash memory, a hard disk or a solid state hard disk; and the memory may also include a combination of the above types of memories.

When one or more programs in the storage medium can be executed by one or more processors, the method for filling data in a table executed on the electronic device side can be implemented.

The processor is configured to execute a program for filling data in a table stored in the memory, so as to realize following steps of the method for filling data in a table executed on the electronic device side:
determining a target copy range in a first table in response to a copy operation on the first table;
determining a paste cell corresponding to each copy cell in the target copy range in a second table, in which the copy cell and the corresponding paste cell have at least one associated target parameter; and
filling cell data in the copy cell into the corresponding paste cell.

A person skilled in the art should further realize that units and algorithm steps of examples described in connection with the embodiments disclosed herein can be realized in electronic hardware, computer software or a combination thereof. In order to clearly illustrate interchangeability of hardware and software, components and steps of the examples have been generally described by function in the above description. Whether these functions are implemented in hardware or software depends on specific application and design constraints of the technical scheme. Skilled persons can use different methods to realize the described functions for each specific application, but this implementation should not be considered beyond the scope of the disclosure.

Steps of a method or algorithm described in combination with the embodiments disclosed herein may be implemented in hardware, a software module executed by a processor, or a combination thereof. The software module can be placed in a random access memory (RAM), an internal memory, a read-only memory (ROM), an electrically programmable ROM, an electrically erasable programmable ROM, a register, a hard disk, a removable disk, a CD-ROM, or any other forms of storage medium known in the art.

The above specific embodiments further explain objects, technical solutions and beneficial effects of the disclosure in detail. It should be understood that the above only shows specific embodiments of this disclosure and is not intended to limit a protection scope of this disclosure. Any modification, equivalent substitution, improvement, or the like made within the spirit and principle of this disclosure should be included in the protection scope of this disclosure.

## Claims

1. A method for filling data in a table, comprising:
determining a target copy range in a first table in response to a copy operation on the first table;
determining a paste cell corresponding to each copy cell in the target copy range in a second table, wherein the copy cell and the corresponding paste cell have at least one associated target parameter; and
filling cell data in the copy cell into the corresponding paste cell.

2. The method of claim 1, wherein said determining a paste cell corresponding to each copy cell in the target copy range in a second table comprises:
determining a paste cell corresponding to each copy cell in the target copy range in a second table based on text recognition.

3. The method of claim 1, wherein said determining a target copy range in a first table comprises:
determining a range formed by columns where a first cell range is located as the target copy range, the first cell range being a cell range corresponding to the copy operation.

4. The method of claim 1 or 3, wherein said determining a paste cell corresponding to each copy cell in the target copy range in a second table comprises:
determining a target paste range in a second table, the target paste range comprising at least one column in the second table;
determining a condition column in the second table and determining a search range in the first table; and
determining in the target paste range, based on the condition column and the search range, a paste cell corresponding to each copy cell in the target copy range.

5. The method of claim 4, wherein said determining in the target paste range, based on the condition column and the search range, a paste cell corresponding to each copy cell in the target copy range comprises:
determining each row included in the target paste range as a to-be-processed row, and performing following processing on the to-be-processed row:
determining cell data located in the to-be-processed row in the condition column as condition data;
determining the condition data in the search range, determining a row where the condition data is located as a target row;
determining a range formed by a copy cell located in the target row in the target copy range as a sub-target copy range corresponding to the to-be-processed row; and
performing following processing on each copy cell in the sub-target copy range:
determining a target paste cell that meets set conditions from the to-be-processed row, wherein the set conditions refer to that the paste cell and the copy cell have the same relative position configured to characterize a position of the paste cell in the to-be-processed row, or a position of the copy cell in the sub-target copy range; and
determining the target paste cell as the paste cell corresponding to the copy cell.

6. The method of claim 4, wherein said determining a target paste range in a second table comprises:
in a case where numbers of rows and columns of a second cell range and the first cell range are the same, determining a range formed by a column where the second cell range is located as a target paste range, the second cell range being a range corresponding to a paste operation on the second table.

7. The method of claim 4, wherein said determining a target paste range in a second table comprises:
performing following processing on each column where the first cell range is located:
determining a column header of the column; and
in a case where it is determined that there is a target column header matching the column header among header rows of the second table, determining the range formed by a column corresponding to the target column header as a target paste range.

8. The method of claim 4, wherein said determining a condition column in the second table and determining a search range in the first table comprises:
in a case where both the first cell range and the second cell range are located in only one row, determining a first cell data set corresponding to a row where the first cell range is located and a second cell data set corresponding to a row where the second cell range is located, the second cell range being a range corresponding to a paste operation on the second table; and
determining a same item in the first cell data set and the second cell data set, determining a column where the same item is located in the second table as a condition column, and determining a column where the same item is located in the first table as a search range.

9. The method of claim 4, wherein said determining a condition column in the second table and determining a search range in the first table comprises:
in a case where both the first cell range and the second cell range are located in N rows, N being a natural number greater than 1, performing following processing on each row where the first cell range is located, the second cell range being a range corresponding to a paste operation on the second table:
determining a third cell data set corresponding to the row;
determining a corresponding row of the row in the second cell range, and determining a fourth cell data set corresponding to the corresponding row;
determining a same item set in the third cell data set and the fourth cell data set; and
determining a same item in the same item set corresponding to each row where the first cell range is located, determining a column where the same item is in the second table as the condition column, and determining a column where the same item is in the first table as a search range.

10. The method of claim 1, wherein said determining a target copy range in a first table comprises:
determining a first column header set corresponding to the first table, and a second column header set corresponding to a second table;
determining associated column headers in the first column header set and the second column header set; and
determining a range formed by a cell corresponding to the associated column headers in a row where the first cell range is located as a target copy range, the first cell range being a cell range corresponding to the copy operation.

11. The method of claim 10, wherein said determining a paste cell corresponding to each copy cell in the target copy range in a second table comprises:
determining a target paste range in a second table, the target paste range comprising at least two cells in a same row in the second table;
performing the following processing on each copy cell in the target copy range:
determining a target paste cell that meets set conditions from the target paste range, the set conditions referring to a column header corresponding to the paste cell and the copy cell; and
determining the target paste cell as a paste cell corresponding to the copy cell.

12. The method of claim 11, wherein said determining a target paste range in a second table comprises:
determining a range formed by a cell corresponding to the associated column headers in a row where a second cell range is located as a target paste range, the second cell range being a range corresponding to a paste operation on the second table.

13. The method of claim 1, wherein said filling cell data in the copy cell into the corresponding paste cell comprises:
performing following processing on the paste cell:
constructing a data filling formula based on the copy cell corresponding to the paste cell; and
filling the data filling formula into the paste cell, wherein
the data filling formula is configured to indicate that the cell data in the corresponding copy cell is presented in the paste cell.

14. An apparatus for filling data in a table, comprising:
a copy range determining module configured to determine a target copy range in a first table in response to a copy operation on the first table;
a paste cell determining module configured to determine a paste cell corresponding to each copy cell in the target copy range in a second table, wherein the copy cell and the corresponding paste cell have at least one associated target parameter; and
a data filling module configured to fill cell data in the copy cell into the corresponding paste cell.

15. An electronic device comprising a processor and a memory, wherein the processor is configured to execute a program for filling data in a table stored in the memory to implement the method for filling data in a table of any one of claims 1 to 13.

16. A storage medium in which one or more programs are stored, wherein the one or more programs are executed by one or more processors to implement the method for filling data in a table of any one of claims 1 to 13.
